# EUROPÄISCHE PATENTSCHRIFT

(11) **EP 3 482 857 B1**
(45) Veröffentlichungstag und Bekanntmachung des Hinweises auf die Patenterteilung: **06.11.2024**
(21) Anmeldenummer: 18205045.0
(22) Anmeldetag: 07.11.2018
(51) Int. Cl.: B23C 3/12

(54) **VORRICHTUNG UND VERFAHREN FÜR DIE PROFILBEARBEITUNG**
DEVICE AND METHOD FOR PROFILE PROCESSING
DISPOSITIF ET PROCÉDÉ DESTINÉ À L'USINAGE DE PROFILÉS

(30) Priorität: 10.11.2017 DE 102017126492
(43) Veröffentlichungstag der Anmeldung: 15.05.2019
(73) Patentinhaber: Urban GmbH & Co. Maschinenbau KG, 87700 Memmingen (DE)
(72) Erfinder: Jägg, Josef, 88450 Berkheim (DE)
(74) Vertreter: Patentanwälte Olbricht, Buchhold, Keulertz Partnerschaft mbB

(56) Entgegenhaltungen:
- EP-A1- 3 072 615
- EP-A2- 1 541 878
- WO-A1-97/11820
- CA-A1- 2 922 130
- GB-A- 2 283 193
- US-A- 4 102 374
- US-A- 5 653 273
- US-A1- 2008 083 193

## Beschreibung

Die Erfindung betrifft ein Verfahren, gemäß dem Oberbegriff des Patentanspruchs 1, für die Bearbeitung des Endbereiches eines Kunststoffprofiles mit einer Vorrichtung für die Bearbeitung des Endbereiches eines Kunststoffprofiles, insbesondere eines Profils für die Herstellung eines Tür- oder Fensterrahmens, wobei die Vorrichtung eine Auflagefläche für das Profil und eine Halteeinrichtung für das Profil aufweist, durch welche das Profil auf der Auflagefläche gehalten ist.

Die eingangs beschriebene Vorrichtung wird im Stand der Technik dazu verwendet, Kunststoffprofile, aus denen Tür- bzw. Fensterrahmen hergestellt werden, vor dem Verschweißvorgang herzurichten. Es geht dabei oftmals um eine exakte Positionierung und Ausrichtung der Gehrungsflächen, da diese exakte Vorbereitung das Schweißergebnis günstig mit Blick auf die Bearbeitungszeit wie auch für die resultierende Festigkeit beeinflusst.

Als Endbereich wird hierbei der Bereich des Kunststoffprofiles angesehen, der sich vom Ende des Kunststoffprofiles ein gewisses Stück in die Profilmitte erstreckt. Die Länge des Stückes ist zum Beispiel abhängig von dem Gehrungswinkel, unter welchem die Profile zu verarbeiten sind. Üblicherweise beträgt der Endbereich wenige Zentimeter.

Mit der eingangs beschriebenen Vorrichtung werden oftmals Kunststoff-Hohlkammerprofile bearbeitet. Es handelt sich dabei nicht um Vollmaterialprofile, die eingesetzten Hohlkammerprofile zeichnen sich durch eine bessere Isolation aus. Die einzelnen Hohlkammern werden untereinander durch längsverlaufende Profilstege abgetrennt, auch das Profil wird an seiner Außenseite durch außenliegende Profilstege begrenzt.

Um das Profil während der Bearbeitung ausreichend zu fixieren ist vorgesehen, dass die Vorrichtung eine Auflagefläche aufweist, auf welche das Profil aufgelegt wird und auf dieser von einer Halteeinrichtung gehalten wird. Als Halteeinrichtung ist in diesem Sinne zum Beispiel ein Niederhalter oder Spanner anzusehen, ohne aber den Gegenstand dieser Erfindung hierauf beschränken zu wollen. Die (Mindest-) Aufgabe der Halteeinrichtung ist es, das Profil während der Bearbeitung in der Vorrichtung zu fixieren.

Die US 2008083193 A1 offenbart ein Verfahren gemäß dem Oberbegriff des Patentanspruchs 1 und beschäftigt sich diesbezüglich mit einem System zur Bearbeitung von bereits verschweißten Fensterrahmen. Dieses System umfasst eine Vorrichtung mit einer Halteeinrichtung, die mindestens ein Verbindungselement aufweist, welches mit dem äußeren Profilsteg eines Profils des Rahmens zusammenwirkt.

Aus der CA 2922130 A1 ist ebenfalls ein System zur Verarbeitung von Fensterrahmen bekannt. Dieses Dokument offenbart eine Vorrichtung mit einer Halteeinrichtung, bei der ein Verbindungselement mit einem äußeren Profilsteg zusammenwirkt.

Die EP 3072615 A1 lehrt einen Fräskopf, der über einen Luftzug Späne beim Fräsen von Profilen entfernt. Zudem ist auch eine Vorrichtung mit einer Halteeinrichtung offenbart, bei welcher eine Halteeinrichtung mit mindestens einem Verbindungselement auf ein Profil einwirkt.

Die US 4102374 A offenbart eine Vorrichtung zur Herstellung von Eckelementen aus Plastikprofilen. Diese Offenlegungsschrift ist nicht direkt im Bereich der Herstellung von Fensterrahmen angesiedelt, offenbart allerdings eine Vorrichtung mit einer Halteeinrichtung für Plastikprofile.

Aus der EP 1541878 A2 ist eine allgemein beschriebene Befestigungsvorrichtung bekannt, welche zwei Bauteile aneinander befestigt.

Die GB 2283193 A offenbart eine Profilschneidvorrichtung für Schweißverbindungen von Kunststoffprofilen.

In der US 5653273 A ist ein universal-präzisions-Holzbearbeitungszentrum offenbart, welches eine Gehrungslehre aufweist.

Die WO 97/11820 A1 zeigt ein multifunktionales Arbeitstischsystem mit einer vertikalen Schraubklemme.

Nun ist beobachtet worden, dass Kunststoffprofile, die in herkömmlichen Vorrichtungen fixiert sind, im Endbereich keine exakte Bearbeitung erlauben.

Die Erfindung hat es sich daher zur Aufgabe gemacht, diesen Stand der Technik zu verbessern.

Diese Aufgabe ist gelöst mit dem Verfahren gemäß Anspruch 1.

Zur Offenbarung gehört eine Vorrichtung, wie eingangs beschrieben, wobei die Halteeinrichtung mindestens ein Verbindungselement aufweist, das mit dem äußeren Profilsteg des Profils haltend zusammenwirkt.

Für ein ordentlich hergestellte/s Fenster oder Türe aus Kunststoffprofilen ist das bündige, versatzfreie Anschließen der Profilsichtflächen, der äußeren Profilstege, entscheidend. Maßtoleranzen und Schwindverhalten des Kunststoffmaterials sind im Stand der Technik verantwortlich für unsauber gestaltete Profilsichtflächen, gerade im Gehrungsbereich.

Der erfindungsgemäße Vorschlag erreicht, dass die für die äußere Gestaltung wichtigen Profilstege bei der Bearbeitung exakt positioniert werden und so eine exakte Bearbeitung in Bezug auf diesen außenliegenden Profilsteg möglich ist. Bezüglich des Kunststoffprofiles typischen Maßtoleranzen oder sonstige, für die Bearbeitung negativer Materialeigenschaften, werden durch den erfindungsgemäßen Vorschlag überwunden.

Überraschenderweise führt der erfindungsgemäße Vorschlag bei einer zerspanenden Bearbeitung des Endbereiches zu erheblich besseren Bearbeitungsergebnissen. Hierbei erfolgt eine zerspanende Bearbeitung derart, dass der äußere Profilsteg stehen bleibt. Dabei werden die in dem Profil innenliegende Profilstege, die parallel aber auch rechtwinklig bzw. schräg zum äußeren Profilsteg verlaufen, entfernt. Diese Bearbeitung führt zu einer Destabilisierung des äußeren Profilsteges, dem die Fixierung durch den erfindungsgemäßen Vorschlag gerade entgegenwirkt und so gerade während der Bearbeitung diesen äußeren Profilsteg stützt und festhält.

Gerade bei solchen Bearbeitungen ist der erfindungsgemäße Vorschlag günstig und vermeidet Ausschussproduktion.

Gleichwirkend mit einer Auflagefläche ist es auch, wenn das Profil von zwei zusammenwirkenden Spannbacken, gegebenenfalls auch ohne auf einer Auflagefläche aufzuliegen, gehalten wird.

Des Weiteren ist in dem Vorschlag in offenbarungsgemäßer Weise vorgesehen, dass die Halteeinrichtung auf oder in der Auflagefläche angeordnet ist. Die Halteeinrichtung unterstützt somit auch die Funktion der Auflagefläche, denn die Halteeinrichtung fixiert das Profil auf der Auflagefläche. Es ist dabei klar, dass die Erfindung auch den Einsatz mehrerer, gegebenenfalls auch unterschiedlich wirkender Halteeinrichtungen umfasst, wobei zum Beispiel die Halteeinrichtung, welche mit einem Verbindungselement ausgestattet ist, mit einer als Spanner oder Niederhalter ausgeführten Halteeinrichtung zusammenwirkt.

Bei einer bevorzugten Ausgestaltung des Vorschlags ist vorgesehen, dass die Halteeinrichtung plattenartig ausgebildet ist. Eine plattenartige Ausgestaltung zeichnet sich dadurch aus, dass die, in Draufsicht gesehene Deckfläche, verhältnismäßig groß ist und die Halteeinrichtung eine verhältnismäßig geringe Dicke aufweist. Dabei wird die Deckfläche von mehreren Seitenkanten begrenzt, an denen die Verbindungselemente vorgesehen sind. Die plattenartige Ausgestaltung kombiniert damit geschickt eine schmalbauende Konstruktion mit einer hohen Stabilität, da an den Seitenkanten eine Vielzahl einzelner Verbindungselemente bzw. ein Verbindungselement an einer langen Strecke angeordnet werden könnte. Damit wird der außenliegende Profilsteg entlang einer möglichst langen Strecke gehalten, was zu einer hohen Prozess-sicherheit führt.

Des Weiteren ist vorgesehen, dass die Halteeinrichtung zwei Längsseiten aufweist, die Längsseiten je mindestens ein Verbindungselement trägt und die Längsseiten zueinander einen Winkel, bevorzugt einen rechten Winkel, einschließen, der den Innenwinkel des herzustellenden Tür- oder Fensterrahmens entspricht. Die Anordnung wird geschickter Weise so gewählt, dass mit einem Aufspannprozess gleich zwei oder jedenfalls noch mehr Profile von der Halteeinrichtung gehalten werden. Da auf den Aufspannprozess dann eine zerspanende Bearbeitung erfolgt, ist es geschickt, die Anordnung gleich so zu wählen, dass mit einem zerspanenden Bearbeitungsschritt zumindest zwei oder noch mehr Profile gleichzeitig bearbeitet werden können. Der Vorschlag unterstützt somit eine effektive, kostensparende Bearbeitung.

In einer vorteilhaften Ausgestaltung ist vorgesehen, dass das Verbindungselement den Profilsteg durch Formschluss und/oder Kraftschluss hält.

Für die Ausgestaltung des Verbindungselementes werden mehrere Alternativen vorgesehen. Zunächst ist vorgesehen, dass das Verbindungselement, als an der Halteeinrichtung vorstehender Haltezahn, ausgebildet ist. Nach diesem Vorschlag wird das Verbindungselement bereits aus einem Haltezahn gebildet. Natürlich umfasst der Vorschlag auch Varianten mit mehr als einen Haltezahn, zum Beispiel zwei, drei, vier oder noch mehr Haltezähnen.

Alternativ ist vorgesehen, dass das Verbindungselement als Haltekante ausgebildet ist. Dabei erstreckt sich die Haltekante geschickterweise über einen größeren Bereich der Längsseite und greift über einen größeren Bereich an dem Profilsteg ein.

Die beiden vorbeschriebenen Varianten sind bevorzugte Beispiele für die Realisierung eines formschlüssigen Verbundes zwischen dem Verbindungselement und dem Profilsteg. Dabei wird der Profilsteg unter den vorstehenden Haltezahn bzw. Haltekante geschoben und so festgehalten. Sie können aber auch in einem kraftschlüssigen Konzept eingesetzt sein.

Dabei ist offenbarungsgemäß vorgesehen, dass die Halteeinrichtung zusammen mit dem Verbindungselement bevorzugt in einer Relativbewegung parallel zur Längserstreckung des Profils gegen die Stirnseite des Profils bewegt wird. Dies umfasst die Lösung, dass das Profil gegen die Halteeinrichtung angestellt wird oder die Halteeinrichtung gegen das Profil bewegt wird, sowie auch eine kombinierte Bewegung.

Bei der vorgeschlagenen Variante eines kraftschlüssigen Verbundes wird die dem Profil zugewandte Frontseite oder Spitze des Verbindungselementes mit Kraft gegen das Profil gedrückt/bewegt. Der offenbarungsgemäße Vorschlag umfasst aber auch eine Lösung, bei welchen sich im Profilsteg eine Nut, Auskerbung, Ausnehmung oder Loch befindet, in die das Verbindungselement haltend eingreift.

Geschickter Weise ist vorgesehen, dass das Verbindungselement eine schräg gestellte Haltefläche aufweist. Diese schräg gestellte Haltefläche ist sowohl bei der Variante Haltezahn wie auch bei der Variante Haltekante realisierbar. Die Orientierung der Haltefläche ist dabei so gewählt, dass bei Einschieben des Verbindungselementes in den Profilsteg mit zunehmenden Einschubweg, der Profilsteg zunehmend nach unten, auf die Auflagefläche, gedrückt wird. Es erfolgt so eine zuverlässige, insbesondere vertikale Festlegung des Profilsteges.

In einer weiteren bevorzugten Ausführungsform ist vorgesehen, dass die Vorrichtung mindestens ein, zumindest entlang der Raumrichtung, bewegbares Bearbeitungswerkzeug aufweist, und die Halteeinrichtung an dem Bearbeitungswerkzeug angeordnet ist. Als Bearbeitungswerkzeug ist zum Beispiel ein spanabhebendes Bearbeitungswerkzeug (zum Beispiel ein Walzenfräser) vorgesehen, ohne aber die Erfindung hierauf festlegen zu wollen. Das Bearbeitungswerkzeug ist für eine Bearbeitung des Endbereiches vorgesehen. Es wurde bereits drauf hingewiesen, dass die offenbarungsgemäße Vorrichtung, auch unterschiedlich wirkende Halteeinrichtungen aufweist und zum Beispiel eine erste Halteeinrichtung den Profilstab - oder das Profil - auf die Auflagefläche spannt und eine zweite Halteeinrichtung, die an dem Bearbeitungswerkzeug angeordnet ist, bei Einsatz des Bearbeitungswerkzeuge (bevorzugt kurz zuvor) mit dem äußeren Profilsteg in Wirkkontakt tritt und so den äußeren Profilsteg kurz vor der Bearbeitung zuverlässig festlegt. Natürlich umfasst die Offenbarung auch eine Lösung, die mit nur einer solchen am Bearbeitungswerkzeug angeordneten Halteeinrichtung ausgestattet ist.

Des Weiteren ist günstiger Weise vorgesehen, dass die Vorrichtung zumindest eine Spannvorrichtung aufweist, und die Spannvorrichtung das Profil auf die Auflagefläche drückt und an der Spannvorrichtung die Halteeinrichtung vorgesehen ist. Der Vorschlag beschränkt sich nicht darauf, dass nur der Profilsteg, der auf der Auflagefläche aufliegt, während der Bearbeitung durch die Halteeinrichtung sicher positioniert ist. Die Offenbarung hat erkannt, dass der Vorschlag insgesamt die Bearbeitung verbessert und Ausschuss vermeidet, wenn auch noch andere, außenliegende Profilstege während der Bearbeitung in geeigneter Weise gehalten werden. Daher umfasst die Offenbarung auch Vorschläge, bei welchen die Profilstege festgehalten werden, die nicht unmittelbar auf der Auflagefläche aufliegen. Eine solche Variante wird mit dem vorgenannten Merkmal vorgeschlagen, bei welchen an der Spannvorrichtung (als erste Halteeinrichtung) eine (zweite) Halteeinrichtung (im Sinne der Erfindung), mit einer, mit dem äußeren Profilsteg zusammenwirkenden Verbindungselement, ausgestattet ist.

Üblicherweise liegt das Profil (hierzu gleichbedeutend Profilstab) auf der Auflagefläche auf und wird von der Spannvorrichtung bevorzugt vertikal von oben nach unten auf die Auflagefläche gespannt. Die verschiedenen Varianten der Offenbarung ermöglichen es jetzt, dass sowohl der äußere Profilsteg, der auf der Auflagefläche aufliegt wie auch der Profilstab, der auf der, der Auflagefläche abgewandten Seite zugeordnet ist, wie auch die seitlichen Profilstege, je nach Anwendungsfall, während der Bearbeitung, zuverlässig gehalten werden.

Dabei ist zu beachten, dass an einer Vorrichtung eine oder auch mehrere Halteeinrichtungen vorgesehen sein können, die je ein äußeren Profilsteg halten. Der geschickten Anordnung ist es also möglich, zum Beispiel zwei oder noch mehr äußere Profilstege so festzulegen, dass eine zuverlässige Bearbeitung möglich ist.

Der Vorschlag gemäß der Erfindung ist ausgesprochen variabel realisierbar. Zunächst ist vorgesehen, dass die Halteeinrichtung mit dem vorgeschlagenen Verbindungselement in der Auflagefläche angeordnet, also zum Beispiel in dieser integriert ausgebildet ist. Alternativ ist es möglich, dass diese Halteeinrichtung zum Beispiel an dem beweglich gelagerten Bearbeitungswerkzeug oder der Spanneinrichtung angeordnet ist. Dabei umfasst der Vorschlag aber auch Lösungen, bei welchen diese Halteeinrichtung mit Verbindungselement separat an das Profil bzw. den Profilstab angestellt werden kann, also hierfür separate Antriebe zur Verfügung stehen. Dies kann zum Beispiel bei komplexen Profilen oder aber auch bei rechtwinklig zur Auflagefläche verlaufenden äußeren Profilstegen von Vorteil sein.

Die eingangs beschriebene Aufgabe wird durch ein System wie nachfolgend beschrieben gelöst. Die Offenbarung umfasst daher auch ein System für die Bearbeitung des Endbereiches eines Kunststoffprofiles, insbesondere eines Profils für die Herstellung eines Tür- oder Fensterrahmens, wobei das System eine Vorrichtung, wie vorbeschrieben, sowie ein Kunststoffprofil aufweist, das von der Vorrichtung bearbeitet wird, und die Halteeinrichtung mindestens ein Verbindungselement aufweist, das mit dem äußeren Profilsteg des Profils haltend zusammenwirkt. Die Vorzüge des offenbarungsgemäßen Vorschlages treten gerade bei dem effektiven Zusammenwirken mit dem Profil zutage.

Bei einer bevorzugten Ausgestaltung des Vorschlags ist vorgesehen, dass das System für die Bearbeitung zweier winklig, bevorzugt rechtwinklig zueinander orientierter Profilstäbe vorgesehen ist, und das Bearbeitungswerkzeug zum Beispiel ein Walzenfräser ist, dessen Höhe gleich oder geringfügig geringer ist, als der Innenabstand der einander gegenüberstehenden Profilstege. Der offenbarungsgemäße Vorschlag erreicht in eleganter Weise, dass eine hochexakte und sichere Bearbeitung des Volumens zwischen zwei gegenüberliegenden äußeren Profilstegen möglich ist. Mindestens ein äußerer Profilsteg, ist durch den offenbarungsgemäßen Vorschlag in seiner Höhenlage exakt festgelegt und mit einem Bearbeitungsschritt kann der Innenraum entsprechend entfernt werden.

Die Offenbarung schlägt bevorzugt einen Walzenfräser als Bearbeitungswerkzeug vor, ohne aber die Offenbarung hierauf zu beschränken. Der Pfiff dieses Vorschlages liegt darin, dass die Bearbeitungshöhe des eingesetzten Bearbeitungswerkzeuges exakt geplant werden kann, da die Höhenlage bzw. Abstand der Innenflächen der jeweilig äußeren Profilstege genau bestimmt und festgelegt und als Maschinenparameter bekannt ist.

Die Erfindung ist in Anspruch 1 definiert und betrifft ein Verfahren für die Bearbeitung des Endbereiches eines Kunststoffprofiles, insbesondere eines Profils für die Herstellung eines Tür- oder Fensterrahmens. Bei diesem erfindungsgemäßen Verfahren wird die vorbeschriebene Vorrichtung eingesetzt. Das erfindungsgemäße Verfahren zeichnet sich durch die Abfolge folgender Schritte aus:
- Auflegen eines zu bearbeitenden Kunststoffprofiles auf einer Auflagefläche
- relatives Anstellen der Halteeinrichtung gegen den offenen Stirnbereich des Profils derart, dass das Verbindungselement der Halteeinrichtung in haltenden Eingriff mit dem äußeren Profilsteg gelangt.

Des Weiteren ist in dem Vorschlag vorteilhafter Weise vorgesehen, dass nach dem haltenden Eingreifen des Verbindungselements am äußeren Profilsteg ein Entfernen von Material oder Bearbeitung im Endbereich des Profilstabes erfolgt, bei welchen insbesondere der äußere Profilsteg nicht entfernt wird. Diese Bearbeitung erfolgt bevorzugt mit einem zerspannenden Bearbeitungswerkzeug.

Des Weiteren umfasst die Offenbarung auch die Verwendung einer vorbeschriebenen Vorrichtung für die Befestigung und gegebenenfalls anschließende Bearbeitung, mindestens eines Kunststoff-profiles als Teil eines Tür- oder Fensterrahmens.

Üblicherweise werden Kunststofffensterrähmen auf Gehrung geschnitten verschweißt. Das bedeutet, dass die Profilstabenden vollständig unter einem Gehrungswinkel geschnitten werden und dann mit dem anderen winklig anschließenden Profil bzw. Profilstab verschweißt wird. Am fertigen Fensterrahmen erkennt man dann die Gehrungsfläche, die in der Regel den halben Innenwinkel der Fensterecke beschreibt. Das Verschweißen der Kunststoffprofile unter dem Gehrungswinkel führt auch zu einer verhältnismäßig großen Schweißfläche und somit zu hohen Eckfestigkeiten. Die Erfindung erlaubt es nun mit hoher Effizienz, Genauigkeit und Eckfestigkeit Kunststoffprofile miteinander zu verschweißen, die eine klassische Verbindungstechnik in Ansicht zeigen, da die Profilstäbe sichtbar rechtwinklig im Eckbereich anschließen, aber tatsächlich die Profilstäbe doch unter einem Gehrungswinkel, verdeckt, durch die äußere Profilstege, miteinander verschweißt sind.

Es ist natürlich klar, dass der am ersten Profilstab verbleibende, überstehende äußere Profilsteg einen inneren Bereich des zweiten winkelig anschließenden Profilstabes überdeckt, d.h. an diesem zweiten Profilstab wurde eben der äußere Profilsteg abgenommen und der innere Bereich freigelegt.

In der Zeichnung ist die Offenbarung insbesondere in einem Ausführungsbeispiel schematisch dargestellt. Es zeigen:
- Fig. 1, 2: je in einer dreidimensionalen Ansicht, verschiedene Ausführungsbeispiele einer offenbarungsgemäßen Vorrichtung
- Fig. 3: in einer dreidimensionalen Ansicht, eine erste Variante einer Halteeinrichtung nach der Offenbarung
- Fig. 4a: in einer dreidimensionalen Ansicht, eine zweite Variante einer Halteeinrichtung nach der Offenbarung
- Fig. 4b: eine Seitenansicht nach Figur 4a
- Fig. 5a, 5b, 5c, 5d: je in einer Seitenansicht, Details (aus dem Ausschnitt V aus Figur 2) verschiedener Ausführungsbeispiele über das Zusammenwirken des Verbindungselementes mit dem Profilsteg nach der Offenbarung

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

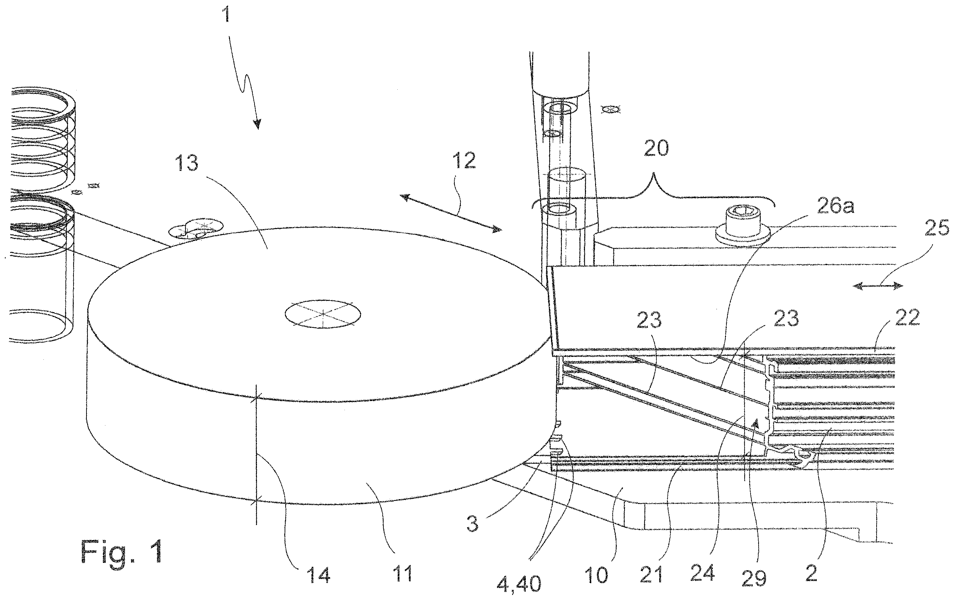

Der schematische Aufbau der Vorrichtung 1 nach der Offenbarung ergibt sich zum Beispiel aus Figur 1. Die Vorrichtung 1 dient für die Bearbeitung des Endbereiches 20 eines Kunststoffprofiles oder Kunststoffprofilstabes 2. Die Vorrichtung 1 besitzt dabei einen Maschinentisch, der nicht gezeigt ist. An dem Maschinentisch ist die Auflagefläche 10 vorgesehen, auf dem das zu bearbeitende Profil 2 aufliegt und für eine Bearbeitung gehalten ist.

Für die Bearbeitung ist ein Bearbeitungswerkzeug 11, zum Beispiel ein Walzenfräser 13 vorgesehen. Auch hier ist zur Erhöhung der Übersichtlichkeit die Lagerung des Bearbeitungswerkzeuges 11 und auch sein Antrieb, insbesondere der Bewegungsantrieb wie der Rotationsantrieb nicht gezeigt, aber natürlich vorgesehen. Das Bearbeitungswerkzeug 11 ist zumindest entlang des Doppelpfeils 12 linear bewegbar.

Das Bearbeitungswerkzeug 11 dient zur Bearbeitung des Endbereiches 20 des Profilstabes 2. Der Endbereich 20 erstreckt sich dabei über einige Zentimeter von dem stirnseitigen Ende des Profilstabes 2 nach innen. Die Länge des Endbereiches 20 ist variabel und hängt einerseits von dem Gehrungswinkel und andererseits von dem Profildicken ab. Der Profilstab 2 wird oben und unten je von einem äußeren Profilsteg 22 bzw. 21 begrenzt. Dabei liegt der Profilstab 2 über den unteren, äußeren Profilsteg 21 auf der Auflagefläche 10 auf. Der Profilstab 2 ist zum Beispiel als Hohlkammerprofil ausgebildet und wird auch innerhalb des Profils 2 von einer Vielzahl von Profilstegen 23 unterteilt.

In Figur 1 ist die Situation nach Durchführung der Bearbeitung gezeigt, insbesondere von dem oberen äußeren Profilsteg 22 verdeckt wurde im Innenbereich des Profils 2 eine, bezogen auf die Längserstreckung 25 des Profils schrägstehende Gehrungsfläche 29 erzeugt, die außenseitig jeweils durch die vorstehenden Profilstege 21 und 22 begrenzt ist.

Um die hier gezeigte exakte Bearbeitung ausführen zu können wurde insbesondere der untere, äußere Profilsteg 21 vor der Bearbeitung durch die offenbarungsgemäße vorgeschlagene Anordnung zuverlässig gehalten. Diese Anordnung zeichnet sich durch eine Halteeinrichtung 3 aus, die grundsätzlich dazu geeignet ist, den Profilstab 2 zu halten, aber zusätzlich mit mindestens einem Verbindungselement 4 ausgestattet ist, das speziell mit dem äußeren Profilsteg 21 zusammenwirkt und diesen sicher und zuverlässig auf die Auflagefläche 10 drückt.

In dem hier gezeigten Ausführungsbeispiel trägt die Halteeinrichtung 3 mehrere Haltezähne 40 als Verbindungselemente. Diese Haltezähne 40 besitzen eine schräg stehende Haltefläche 42 und sind so gestaltet, dass der Profilsteg 21 zwischen der Auflagefläche 10 und der Haltefläche 42 eingeschoben werden kann. Die Anordnung ist dabei so gewählt, dass die Außenseite des äußeren Profilsteges 21 gerade im Endbereich 20 gegen die Auflagefläche 10 gedrückt wird und so Maßtoleranzen des Profils 2, gerade in seinem Endbereich 20, sicher eliminiert werden.

Durch das exakte Festhalten des Endbereiches 20 des äußeren Profilsteges 21 ist die vertikal Lage der Innenseite 26 dieses äußeren Profilsteges 21 festgelegt. Auch ist der innere Abstand 24 zwischen den einander zugewandten Innenseiten 26, 26a des unteren äußeren und oberen äußeren Profilsteges 21 und 22 bekannt. Damit ist dann auch die vertikale Position der Innenseite 26a des oberen äußeren Profilsteges 22 bekannt. Nun wird das Bearbeitungswerkzeug 11 in genau der Höhe geführt, dass es gerade noch nicht die Innenseite 26 des unteren äußeren Profilsteges 21 bearbeitet. Geschickterweise besitzt das Bearbeitungswerkzeug 11 eine Höhe 14, die gleich oder geringfügig geringer ist wieder in Abstand 24. Damit wird auch gerade die Innenseite 26a des oberen äußeren Profilsteges 22 nicht bearbeitet.

Es ist klar, dass bei Profilstäben mit großen Maßtoleranzen natürlich auch der obere Profilsteg 22 mit einer Halteeinrichtung 3, wie sie beschrieben wurde und in der Auflagefläche 10 integriert ist, gehalten werden kann und so auch solche ungenauen Profile zuverlässig verarbeitet werden können.

In Figur 1 ist die Bearbeitung nur eines aufgespannten Profilstabes 2 gezeigt.

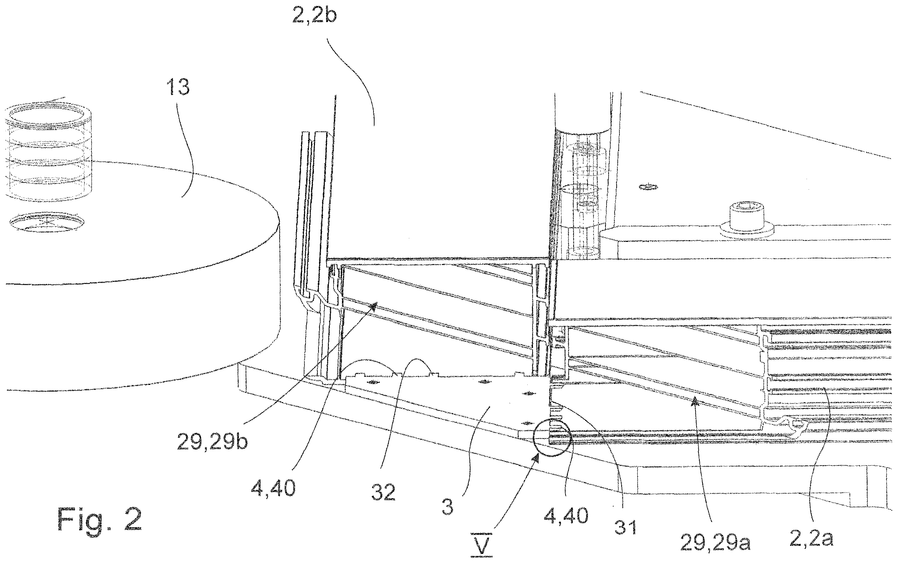

In Figur 2 sind zwei Profilstäbe 2, 2a, 2b gezeigt, die gleichzeitig durch eine gemeinsame Halteeinrichtung 3 gehalten sind. Hierzu ist die Halteeinrichtung 3 plattenartig ausgestaltet und in Draufsicht gesehen zum Beispiel mehreckig gebildet, wobei insbesondere zwei Längsseiten 31, 32 vorgesehen sind, die in dem hier gezeigten Ausführungsbeispiel rechtwinkelig zueinander orientiert sind und an denen die Verbindungselemente 4,40, hier als Haltezähne 40 realisiert, vorgesehen sind. Die beiden Längsseiten 31,32 schließen dabei zum Beispiel einen rechten Winkel ein, natürlich ist die hier gezeigte Ausgestaltung bei Bildung eines rechtwinkligen Rahmens günstig, insbesondere wenn diese unter einem Gehrungswinkel von 45° bearbeitet werden. Die zweifache Aufspannung führt zu einer hohen Effizienz, da mit einem Bearbeitungsschritt gleich zwei Profilendbereiche bearbeitet und so die jeweiligen Gehrungsfläche 29a an dem ersten Profilstab 2a und Gehrungsfläche 29b an dem zweiten Profilstab 2b hergestellt werden können.

Es werden somit gleichzeitig die Gehrungsflächen 29a und 29b an den jeweiligen Profilstäben 2a bzw. 2b gestaltet. In der in Figur 2 gezeigten Anordnung erfolgt dann, ein Umspannen der Profilstäbe 2a und 2b in eine Schweißvorrichtung, derart, dass die beiden Gehrungsflächen 29a und 29b einander gegenüberliegend sind und dann, wie bekannt, miteinander verschweißt werden können.

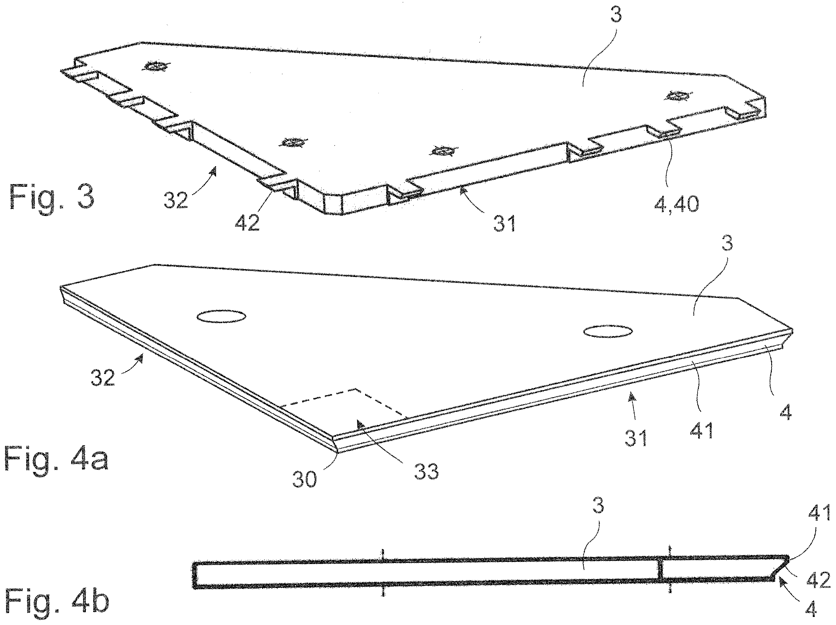

Figur 3 zeigt in einem ersten Ausführungsbeispiel die plattenartige Halteeinrichtung 3, die an ihren beiden Längsseiten 31,32 eine Mehrzahl, hier jeweils vier, als vorstehende Haltezähne 40 ausgebildete Verbindungselemente 4 aufweist. Die Haltezähne 40 besitzen je eine schräg stehende Haltefläche 42, die dazu dienen, den Profilsteg 21 zuverlässig auf die Auflagefläche 10 zu drücken.

In Figur 4a und 4b ist anstelle eines Haltezahnes 40 das Verbindungselement 4 als Haltekante 41 ausgebildet, die sich über einen längeren Bereich erstreckt und in geeigneter Weise in das Profilinnere des Profils 2, oberhalb des unteren äußeren Profilsteges 21 eintaucht.

Es ist auch eine Variante bekannt, bei welchen an der Außenecke 30 eine rechteckige Ausnehmung 33 (in Figur 4a gestrichelt angedeutet) angeordnet ist, um so ein Einführen der jeweiligen Längsseiten 31 und 32 in die benachbart angeordneten Profilstäbe 2a, 2b zu erlauben.

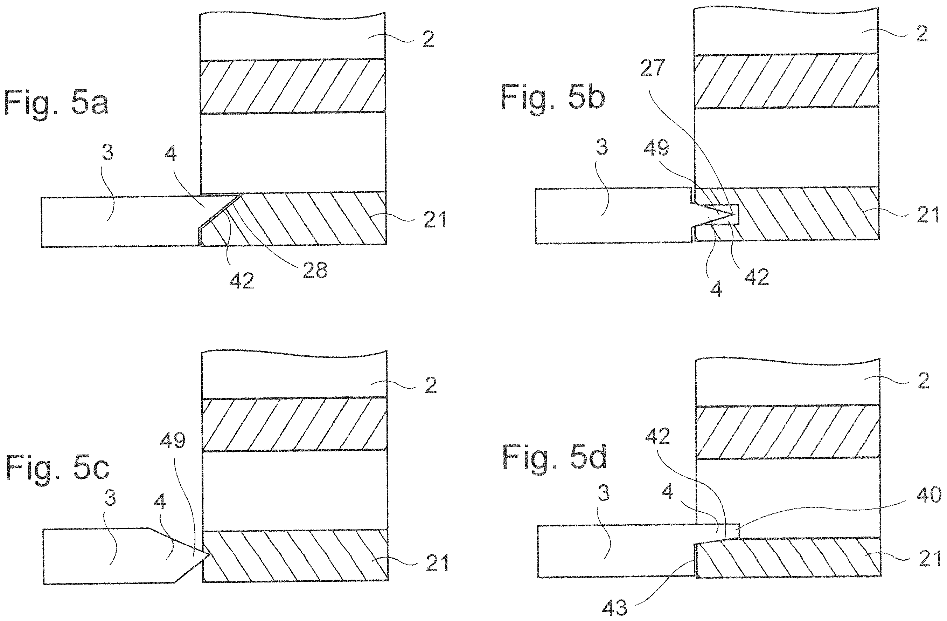

Bei den Figuren 5a bis 5d sind verschiedene Varianten über das Zusammenwirken des Verbindungselementes 4 mit dem Profilsteg 21 gezeigt. All die hier gezeigten Beispiele zeigen das vorteilhafte systemhafte Zusammenwirken der vorgeschlagenen Vorrichtung 1 mit dem hiermit gehaltenen Profil 2.

Figur 5d zeigt vergrößert den Anwendungsfall, wie er auch in Figur 1 bzw. 2 gezeigt ist. In dem hier gezeigten Ausführungsbeispiel ist das Verbindungselement 4 als Haltezahn 40 realisiert. Er ist auf seiner unteren, dem Profilsteg 21 zugewandten Seite mit einer schräg stehenden Haltefläche 42 ausgestattet. Die Höhe des Absatzes 43 ist dabei bevorzugter Weise etwas geringer wie die Dicke des Profilsteges 21, um eine sichere Verbindung aber auch eine ausreichende resultierende Kraft auf die Auflagefläche 10 zu bewirken.

In Figur 5a ist an dem äußeren Profilsteg 21 an seiner Außenseite der Stirnseite eine Phase 28 vorgesehen, die mit der schräg stehenden Haltefläche 42 des Verbindungselementes 4 zusammenwirkt.

In Figur 5b ist das Verbindungselement 4 als Spitze 49 ausgebildet und in dem äußeren Profilsteg 21 befindet sich an dessen offener Stirnseite eine längsverlaufende Nut 27, in die die Spitze 49 des Verbindungselementes 4 eintaucht. Die untere, der Auflagefläche 10 zugewandte Seite der Spitze 49 ist wiederum als schräg stehende Haltefläche 42 ausgebildet und drückt den Profilsteg 21 nach unten. Gegebenenfalls ist die Nut 27 so breit, dass die obere Seite der Spitze 49 keinen oder nur geringen Kontakt mit dem Profilsteg 21 hat.

Figur 5c zeigt auch die Anordnung einer Spitze 49 als Verbindungselement 4 an der Halteeinrichtung 3. In diesem Fall wird aber an dem Profilsteg 21 (ähnlich wie in dem Ausführungsbeispiel nach Figur 5d) keine zusätzliche Bearbeitung vorgenommen. Die Spitze 49 wird in dem Ausführungsbeispiel nach Figur 5c mit ausreichender Kraft in das stirnseitige Material des Profilsteges 21 gedrückt und führt so zu einem Festhalten bzw. einer Fixierung des Profilsteges 21, und somit des gesamten Profils bzw. Profilstabes 2.

Es ist klar, dass die in den Figuren 5a bis 5d gezeigten Varianten die Ausgestaltung des Verbindungselementes 4 nicht entweder auf einen Haltezahn 40 oder auf eine Haltekante 41 festlegen, die gezeigten Ausführungsbeispiele können wahlweise für beide Formen des Verbindungselementes 4 genutzt werden.

## Patentansprüche

1. Verfahren für die Bearbeitung des Endbereiches eines Kunststoffprofiles, insbesondere eines Profils für die Herstellung eines Tür- oder Fensterrahmens, mit einer Vorrichtung (1) für die Bearbeitung des Endbereiches (20) eines Kunststoffprofiles (2), insbesondere eines Profils für die Herstellung eines Tür- oder Fensterrahmens, wobei die Vorrichtung (1) eine Auflagefläche (10) für das Profil (2) und eine Halteeinrichtung (3) für das Profil (2) aufweist, durch welche das Profil (2) auf der Auflagefläche (10) gehalten ist, wobei die Halteeinrichtung (3) mindestens ein Verbindungselement (4) aufweist, das mit einem äußeren Profilsteg (21, 22) des Profils (2) haltend zusammenwirkt, **gekennzeichnet durch** die Abfolge folgender Schritte:
- Auflegen eines zu bearbeitenden Kunststoffprofiles auf einer Auflagefläche (10)
- relatives Anstellen der Halteeinrichtung (3) gegen den offenen Stirnbereich des Profils (2) derart, dass das Verbindungselement (4) der Halteeinrichtung (3) in haltenden Eingriff mit dem äußeren Profilsteg (21, 22) gelangt.

2. Verfahren nach Anspruch 1, **dadurch gekennzeichnet, dass** nach dem haltenden Eingreifen des Verbindungselements (4) am äußeren Profilsteg (21, 22) ein Entfernen von Material oder Bearbeitung im Endbereich des Profilstabes erfolgt, bei welchen insbesondere der äußere Profilsteg (21, 22) nicht entfernt wird.

## Claims

1. Method for machining the end region of a plastic profile, in particular a profile for the manufacture of a door or window frame, with a device (1) for machining the end region (20) of a plastic profile (2), in particular a profile for the manufacture of a door or window frame, wherein the device (1) has a supporting surface (10) for the profile (2) and a holding device (3) for the profile (2), by means of which the profile (2) is held on the supporting surface (10), wherein the holding device (3) has at least one connecting element (4) which cooperates in a holding manner with an outer profile web (21, 22) of the profile (2), **characterised by** the sequence of the following steps:
- Placing a plastic profile to be processed on a support surface (10)
- relative positioning of the holding device (3) against the open end region of the profile (2) in such a way that the connecting element (4) of the holding device (3) comes into holding engagement with the outer profile web (21, 22).

2. Method according to claim 1, **characterised in that,** after the retaining engagement of the connecting element (4) on the outer profile web (21, 22), material or machining is removed in the end region of the profile bar, in which, in particular, the outer profile web (21, 22) is not removed.

## Revendications

1. Procédé pour l'usinage de la zone d'extrémité d'un profilé en matière plastique, notamment d'un profilé pour la fabrication d'un cadre de porte ou de fenêtre, avec un dispositif (1) pour l'usinage de la zone d'extrémité (20) d'un profilé en matière plastique (2), notamment d'un profilé pour la fabrication d'un cadre de porte ou de fenêtre, le dispositif (1) présentant une surface d'appui (10) pour le profilé (2) et un dispositif de maintien (3) pour le profilé (2), par lequel le profilé (2) est maintenu sur la surface d'appui (10), le dispositif de maintien (3) présentant au moins un élément de liaison (4) qui coopère en le maintenant avec une nervure extérieure (21, 22) du profilé (2), **caractérisé par** la succession des étapes suivantes :
- Pose d'un profilé en plastique à usiner sur une surface d'appui (10)
- l'application relative du dispositif de retenue (3) contre la zone frontale ouverte du profilé (2) de telle sorte que l'élément de liaison (4) du dispositif de retenue (3) parvienne en engagement de retenue avec l'âme extérieure (21, 22) du profilé.

2. Procédé selon la revendication 1, **caractérisé en ce qu'**après l'engagement de maintien de l'élément de liaison (4) sur l'âme extérieure (21, 22) du profilé, on procède à un enlèvement de matériau ou à un usinage dans la zone d'extrémité de la barre profilée, dans lesquels notamment l'âme extérieure (21, 22) du profilé n'est pas enlevée.
